# EUROPÄISCHE PATENTSCHRIFT

(11) **EP 1 661 357 B1**
(45) Veröffentlichungstag und Bekanntmachung des Hinweises auf die Patenterteilung: **28.08.2013**
(21) Anmeldenummer: 04732622.8
(22) Anmeldetag: 13.05.2004
(51) Int. Cl.: H04L 29/06, H04L 29/12

(54) **VERFAHREN UND VORRICHTUNG ZUM UMGANG MIT ÄNDERUNGEN DER NETZWERKADRESSE BEI MOBILER DATENÜBERTRAGUNG**
METHOD AND DEVICE FOR HANDLING MODIFICATIONS OF NETWORK ADDRESSES DURING MOBILE DATA TRANSMISSION
PROCEDE ET DISPOSITIF POUR GERER DES MODIFICATIONS DE L'ADRESSE DE RESEAU POUR LA TRANSMISSION DE DONNEES MOBILE

(30) Priorität: 04.09.2003 DE 10340805
(43) Veröffentlichungstag der Anmeldung: 31.05.2006
(73) Patentinhaber: Siemens Aktiengesellschaft, 80333 München (DE)
(72) Erfinder: GRIMMINGER, Jochen, 80638 München (DE); NAUMANN, Mirko, 82538 Geretsried (DE); SCHIELEIN, Michael, 80997 München (DE)
(86) Internationale Anmeldenummer: PCT/EP2004/050781
(87) Internationale Veröffentlichungsnummer: WO 2005/025171

(56) Entgegenhaltungen:
- EP-A- 0 998 098
- EP-A- 1 349 322
- WO-A-02/32159
- STEVENS W R ED - STEVENS ET AL: "TCP/IP ILLUSTRATED, PASSAGE" TCP/IP ILLUSTRATED. VOL. 1 : THE PROTOCOLS, PROFESSIONAL COMPUTING SERIES, READING, MA : ADDISON WESLEY, US, Bd. VOL. 1, 1994, Seiten 1-20, XP002285274 ISBN: 0-201-63346-9
- STAALHAGEN L: "A COMPARISON BETWEEN THE OSI REFERENCE MODEL AND THE B-ISDN PROTOCOL REFERENCE MODEL" IEEE NETWORK, IEEE INC. NEW YORK, US, Bd. 10, Nr. 1, 1996, Seiten 24-33, XP000580084 ISSN: 0890-8044
- [Online] XP002298875 Gefunden im Internet: URL:http://www.ietf.org/html.charters/dccp -charter.html> [gefunden am 2004-09-30]
- DRAFT-KOHLER-DCCP-MOBILITY-00.TXT, 12. Juli 2004 (2004-07-12), Seiten 1-16, XP002298876
- PHELAN, T: "draft-phelan-dccp-lite-00.txt" INTERNET DRAFT, August 2003 (2003-08), XP015004849 IETF, GENEVA
- KOHLER E; HANDLEY M; FLOYD S, PADHYE J: "draft-ietf-dccp-spec-04.txt" INTERNET DRAFT, 30. Juni 2003 (2003-06-30), XP015001633 IETF, GENEVA
- KOHLER E; HANDLEY M; FLOYD S, PADHYE J: "draft-ietf-dccp-spec-03.txt" INTERNET DRAFT, 19. Mai 2003 (2003-05-19), XP015001632 IETF, GENEVA
- KOHLER E; HANDLEY M; FLOYD S, PADHYE J: "draft-ietf-dccp-spec-02.txt" INTERNET DRAFT, 9. Mai 2003 (2003-05-09), XP015001631 IETF, GENEVA
- KOHLER E; HANDLEY M; FLOYD S, PADHYE J: "draft-ietf-dccp-spec-01.txt" INTERNET DRAFT, 2. März 2003 (2003-03-02), XP0015001630 IETF, GENEVA

## Beschreibung

Die vorliegende Erfindung betrifft ein Verfahren und eine entsprechend ausgestaltete Vorrichtung zur Datenübertragung in einem Datennetz, insbesondere zur mobilen Datenübertragung entsprechend dem Internet-Protokoll (IP) in einem funkbasierten zellularen Datennetz, z.B. im Rahmen einer Voice-over-IP-Anwendung.

Zur Anbindung von mobilen Datenübertragungsvorrichtungen an Datennetze werden in der Regel funkbasierte zellulare Datennetze verwendet, in die sich der mobile Teilnehmer einwählt. Für die Datenübertragung wird üblicherweise das Internet-Protokoll verwendet. Bei der Einwahl in das Datennetz wird der Datenübertragungsvorrichtung von einem Netzbetreiber eine Adresse, speziell eine IP-Adresse, zugewiesen, über welche die Datenübertragungsvorrichtung in dem Datennetz identifizierbar ist. Für bestimmte Anwendungen, z.B. für eine Sprachkommunikation mittels einer Voice-over-IP-Anwendung, bestehen in höheren Protokollschichten Verknüpfungen zu der IP-Adresse, die benötigt werden, um z.B. Daten zu dem richtigen Empfänger zu leiten oder den Absender der Daten zu identifizieren.

Voice-over-IP-Anwendungen verwenden typischerweise in einer höheren Protokollschicht ein Echtzeitdatenübertragungsprotokoll, wie z.B. das RTP-Protokoll ("Realtime Transport Protocol"), und in einer darunter liegenden Protokollschicht ein Transportprotokoll, wie z.B. das DCCP-Protokoll ("Datagram Congestion Protokoll"). Das DCCP-Protokoll bietet besondere Vorteile bei der Übertragung digitaler Sprach- und Bilddaten zwischen zwei Kommunikationspartnern und stellt insbesondere bereits einfache Mittel zur Unterstützung mobiler Anwendungen bereit, indem es z.B. eine Änderung der IP-Adresse bei bestehender Datenverbindung ermöglicht.

Zum Aufbau und zur Steuerung von Datenverbindungen werden bei Sprachkommunikationsanwendungen in einer höheren Protokollschicht, die über der Protokollschicht der Transportprotokolle angesiedelt ist, Signalisierungsprotokolle eingesetzt. Das Signalisierungsprotokoll SIP ("Session Initiation Protocol") umfasst z.B. so genannte URI-ICennzeichner ("Uniform Ressource Identifier"). Ein Teilnehmer einer Voice-over-IP-Sprachkommunikationsanwendung erhält mittels eines solchen URI-ICennzeichners eine global gültige Identifikation. Ein URI-Kennzeichner wird dabei einer bestimmten IP-Adresse zugeordnet, so dass Daten, die für einen durch einen bestimmten URI-Kennzeichner identifizierten Teilnehmer bestimmt sind, an die entsprechende IP-Adresse geleitet werden können. Die Zuordnungsinformationen von URI-Kennzeichner und IP-Adresse werden dabei zentral im Datennetz verwaltet.

Bewegt sich die mobile Datenübertragungsvorrichtung in einem zellularen Datennetz, so kann es dadurch zu einer Änderung einer Zelle des Datennetzes, in der sich die mobile Datenübertragungsvorrichtung gerade befindet, kommen. Es besteht auch die Möglichkeit, dass die mobile Datenübe.r.tragungseinrichtung in eine Zelle eines weiteren funkbasierten zellularen Datennetzes bewegt wird, welches mit dem ersten zellularen Datennetz über ein übergeordnetes Datennetz verbunden ist. Falls das weitere zellulare Datennetz von einem anderen Netzbetreiber betrieben wird, kommt es somit zu einem Wechsel des Netzbetreibers. Bei den oben genannten Vorgängen wird in der Regel dem mobilen Teilnehmer eine neue IP-Adresse zugewiesen. Aufgrund der nun falschen Zuordnung von URI-Kennzeichner und IP-Adresse kann eine durch das SIP-Protokoll gesteuerte bestehende Datenverbindung, z.B. zur Echtzeitübertragung von Sprache im

Rahmen einer Voice-over-IP Anwendung, nicht weiter aufrecht erhalten werden.

Es besteht somit ein Problem bei der Datenübertragung, wenn sich während einer bestehenden und durch eine höhere Protokollschicht gesteuerten Datenverbindung die IP-Adresse einer Datenübertragungsvorrichtung ändert und dadurch Verknüpfungen mit der IP-Adresse auf Ebene dieser höheren Protokollschicht nicht mehr aktuell sind. Dieses Problem besteht insbesondere im Falle einer mobilen Datenübertragungsvorrichtung, die in eine andere Zelle des zellularen Datennetzes bewegt wird, während eine durch das SIP-Signalisierungsprotokoll gesteuerte Datenverbindung besteht.

Um trotzdem Mobilität in einem IP-Datennetz zu ermöglichen, wurde das so genannte MIP-Protokoll ("Mobile Internet Protocol") spezifiziert, welches einer mobilen Datenübertragungsvorrichtung eine feste IP-Adresse zuordnet, die unabhängig von dem jeweiligen Standort der mobilen Datenübertragungsvorrichtung gültig bleibt. Da diese IP-Adresse einem bestimmten Bereich des Datennetzes zugeordnet ist, sich die mobile Datenübertragungseinrichtung jedoch in einem anderen, weit entfernten Bereich des Datennetzes befinden kann, erfordert MIP umfangreiche Umleitungen des Datenverkehrs, die mit Verzögerungen verbunden sind, und ist insgesamt mit hohen Aufwänden verbunden. Auch ist MIP nur in einer speziellen schnelleren Ausgestaltung, genannt FastMIP, zur Echtzeitdatenübertragung geeignet.

Aus WO 02/321 159 A ist ein System mit mobilen Hosts bekannt, bei dem ein Host an unterschiedliche Zugangsnetze des Systems angeschlossen und über diese Kommunikationsbeziehungen zu anderen Hosts des System durchführen kann, wozu dem Host ein vom Zugangsnetz unabhängiger Identifier und eine Kommunika-tionsadresse bzw. IP- Adresse für die Durchführung einer aktiven Kommunikationsbeziehung mit einem anderen Host zugeordnet ist. Die IP- Adresse wechselt in Abhängigkeit von dem angeschlossenen Zubringernetz und wird einem User Name Service UNS mitgeteilt. Die korrespondierenden Hosts lernen die neue IP- Adresse vom dem User Name Service.

In EP-A-0 998 098 ist ein Verfahren zur Aufrechterhaltung von mobilen TCP Verbindungen zwischen mobilen Terminals beschrieben, bei dem die IP- Adressen der Terminals während der Verbindungen wechseln. Es wird ein global einheitlicher mobiler TCP- Verbindungs- Identifizierer benutzt, welcher in jedes Datensegment eingefügt wird und immer die TCP- Verbindung identifiziert. Mit Hilfe des einheitlichen mobilen TCP- Verbindungs- Identifizierers können wechselnde IP- Adressen aktualisiert werden.

Die vorliegende Erfindung hat daher zur Aufgabe, ein Verfahren und eine Vorrichtung zur Datenübertragung bereitzustellen, welche das oben beschriebene Problem bei der Änderung der Adresse lösen und dadurch bei geringem Aufwand eine Ausschöpfung der Merkmale und Vorteile von auf spezielle Anwendungszwecke abgestimmten Protokollen ermöglicht.

Die Aufgabe wird durch ein Verfahren mit den Merkmalen des Anspruchs 1 bzw. durch eine Datenübertragungsvorrichtung mit den Merkmalen des Anspruchs 14 gelöst. Die abhängigen Ansprüche definieren bevorzugte oder vorteilhafte Ausführungsformen der vorliegenden Erfindung.

Die vorliegende Erfindung sieht vor, dass bei einer Änderung einer Datennetz-Adresse, durch welche eine Datenübertragungsvorrichtung auf Ebene der Transportschicht identifizierbar ist, diese Änderung gegenüber dem Signalisierungsprotokoll angezeigt wird, so dass das Signalisierungsprotokoll bestehende Verknüpfungen mit der Datennetz-Adresse aktualisiert werden können.

Die Änderung der Datennetz-Adresse, z.B. in Form einer IP-Adresse, kann dabei abhängig von der jeweiligen Systemumgebung durch Auslösen eines Interrupts, Aufruf einer

Callback-Funktion oder durch Übergabe einer Nachricht in Form eines Message-Objects angezeigt werden. Vorzugsweise wird dabei die neue Datennetz-Adresse an das Signalisierungsprotokoll übertragen, so dass diese Information bei der Aktualisierung der auf Ebene des Signalisierungsprotokolls bestehenden Verknüpfungen mit der Adresse verwendet werden kann.

Die Erfindung eignet sich insbesondere zur mobilen Datenübertragung in einem zellularen Datennetz entsprechend dem IP-Protokoll im Rahmen einer Sprachdatenverbindung, die auf Ebene einer Anwendungsschicht durch ein Signalisierungsprotokoll, wie z.B. das SIP-Protokoll, gesteuert wird. Die Sprachdatenverbindung umfasst dabei vorzugsweise ein Echtzeitdatenübertragungsprotokoll, wie z.B. das RTP-Protokoll, und ein Transportprotokoll, wie z.B. das DCCP-Protokoll.

Hieraus ergibt sich als Vorteil, dass die Merkmale des auf Multimedia-Anwendungen zugeschnittenen DCCP-Protokolls in Verbindung mit dem SIP-Protokoll bei der mobilen Datenübertragung zur Verfügung stehen. Insbesondere können die in dem DCCP-Protokoll enthaltenen Mobilitätskonzepte, nämlich eine Änderung der IP-Adresse bei bestehender Datenverbindung, in die Datenübertragung unter Verwendung des SIP-Signalisierungsprotokolls eingebunden werden. Hierdurch kann auf vorteilhafte Weise die Echtzeitübertragung von Daten, z.B. Sprachdaten bei einer Voice-over-IP-Anwendung, in einem mobilen Umfeld erreicht werden.

Des Weiteren besteht, da die Erfindung lediglich von der Möglichkeit der Änderung der IP-Adresse ausgeht, der Vorteil, dass die erfindungsgemäße mobile Datenübertragung basierend auf den Protokollen DCCP und SIP kompatibel zu dem MIP-Konzept ist, welches eine feste IP-Adresse vorsieht.

Die Erfindung wird nachfolgend näher unter Bezugnahme auf die Zeichnung anhand eines bevorzugten Ausführungsbeispiels erläutert.
Fig. 1 zeigt schematisch ein zellulares Datennetz, welches zur Anwendung der Erfindung geeignet ist, und
Fig. 2 zeigt ein Bl.ockdiagramm zur Veranschaulichung eines Verfahrens zur Datenübertragung gemäß einem bevorzugten Ausführungsbeispiel der vorliegenden Erfindung.

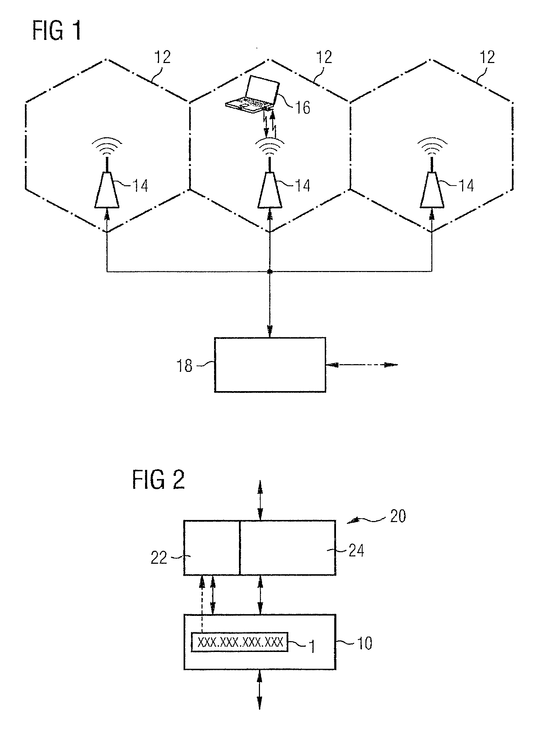

In Fig. 1 ist schematisch ein funkbasiertes zellulares Datennetz dargestellt. Funkstationen oder Basisstationen 14 ermöglichen einer mobilen Datenübertragungsvorrichtung 16 eine Datenverbindung. Das funkbasierte zellulare Datennetz weist eine Vermittlungseinrichtung 18 auf, welche den Datenverkehr von und zu den Funkstationen 14 steuert und Verwaltungsfunktionen des funkbasierten zellularen Datennetzes übernimmt. Die Vermittlungseinrichtung 18 steuert somit insbesondere auch den Datenverkehr mit der mobilen Datenübertragungsvorrichtung 16 in dem zellularen Datennetz. Das funkbasierte zellulare Datennetz kann über die Vermittlungseinrichtung 18 eine Datenverbindung zu weiteren Teilen eines übergeordneten Datennetzes, welches das funkbasierte zellulare Datennetz als Teil umfasst, aufweisen. Die mobile Datenübertragungsvorrichtung 16 kann somit über das funkbasierte zellulare Datennetz eine Datenverbindung zu weiteren mobilen Datenübertragungsvorrichtungen 16 in demselben zellularen Datennetz, zu weiteren mobilen Datenübertragungsvorrichtungen in weiteren ebenfalls funkbasierten zellularen Teilen des übergeordneten Datennetzes oder zu nicht mobilen Datenübertragungsvorrichtungen in weiteren Teilen des übergeordneten Datennetzes, beispielsweise in einem Festnetz, unterhalten.

Zur Datenübertragung über das funkbasierte zellulare Datennetz entsprechend dem IP-Protokoll wird eine Funkverbindung zwischen der Funkstation 14, welche die Zelle 12 des zellularen Datennetzes versorgt, in der sich die mobile Datenübertragungsvorrichtung 16 gerade befindet, und derselben aufgebaut. Hierbei wird der mobilen Datenübertragungsvorrichtung 16 eine IP-Adresse 1 zugewiesen. Wird die mobile Datenübertragungsvorrichtung 16 in eine andere Zelle 12 des Datennetzes bewegt, so wird eine neue Funkverbindung zu der entsprechenden Funkstation 14 aufgebaut. Hierbei wird der mobilen Datenübertragungsvorrichtung 16 auch eine neue IP-Adresse 1 zugewiesen.

Fig. 2 veranschaulicht als Ausführungsbeispiel der vorliegenden Erfindung ein Verfahren zur Datenübertragung im Falle einer Übermittlung von Sprachdaten im Rahmen einer Voice-over-IP-Anwendung. Das Verfahren verwendet zur Datenübertragung das IP-Protokoll, welches eine untere Protokollschicht 10 und eine darüber liegende höhere Protokollschicht 20 umfasst. Die untere Protokollschicht 10 verwendet das speziell für Multmedia-Anwendungen geeignete DCCP-Transportprotokoll. Dieses unterstützt auch einen Wechsel der IP-Adresse 1 bei einer bestehenden Datenverbindung, d.h. die Zuweisung einer neuen IP-Adresse 1 in dem funkbasierten zellularen Datennetz kann durch das DCCP-Protokoll verarbeitet werden. Das Verfahren verwendet in der höheren Protokollschicht das SIP-Signalisierungsprotokoll 22, welches Steuerungsfunktionen einer Sprachdatenverbindung zur Übermittlung der Sprachdaten übernimmt. Des Weiteren verwendet das Verfahren für die Sprachdatenverbindung in der höheren Protokollschicht neben dem SIP-Signalisierungsprotokoll 22 das RTP-Echtzeitdatenübertragungsprotokoll 24.

Gemäß dem SIP-Protokoll wird z.B. bei einer Voice-over-IP-Telekommunikationsanwendung ein Teilnehmer über einen global gültigen URI-Kennzeichner erreicht. Da in der unteren Protokollschicht 10 die Identifikation einer mobilen Datenübertragungseinrichtung 16 über die IP-Adresse 1 erfolgt, werden auf Ebene des SIP-Signalisierungsprotokolls 22, d.h. in der höheren Protokollschicht 20, Informationen zur Zuordnung von URI-Kennzeichner und IP-Adresse 1 benötigt. Diese Zuordnungsinformationen können z.B. auf einem Server, der beispielsweise in der in Fig. 1 gezeigten Vermittlungseinrichtung 18 enthalten sein kann, zentral verwaltet werden.

Bei einer Änderung der IP-Adresse 1, z.B. weil die in Fig. 1 gezeigte mobile Datenübertragungsvorrichtung 16 in eine andere Zelle 12 des funkbasierten zellularen Datennetzes bewegt wird, wird dies gegenüber der höheren Protokollschicht 20 angezeigt. Dies kann durch Übermittlung einer Information geschehen, insbesondere derart, dass auf Ebene des SIP-Signalisierungsprotokolls 22 die neue IP-Adresse 1 verfügbar ist. Auf Ebene des SIP-Signalisierungsprotokolls 22 wird diese Information genutzt, um bestehende Verknüpfungen mit der IP-Adresse zu aktualisieren. Insbesondere können die auf dem Server verwalteten Zuordnungsinformationen von URI-Kennzeichner und IP-Adresse aktualisiert werden, so dass ein Fortbestehen der Sprachdatenverbindung gewährleistet ist. In dem gezeigten Ausführungsbeispiel ist die mobile Datenübertragungsvorrichtung 16 derart ausgestaltet, dass sie eine Änderung ihrer IP-Adresse 1 gegenüber der höheren Protokollschicht 20 anzeigt. Dies geschieht durch Übergabe einer Nachricht in Form eines Message-Objects, welche die neue Adresse als Information enthält. Zur Anzeige der Adressänderung können auch, abhängig von der jeweiligen Systemumgebung, Callback-Funktionen, Interrupts etc. zum Einsatz kommen.

Das erläuterte Ausführungsbeispiel beschreibt die Übertragung von Sprachdaten im Rahmen einer mobilen Voice-over-IP-Anwendung in einem funkbasierten zellularen IP-Datennetz, die Erfindung ist jedoch nicht darauf beschränkt. Eine weitere vorteilhafte Einsatzmöglichkeit der Erfindung ergibt sich z.B. bei der mobilen Echtzeitübertragung von Multimediadaten in einem funkbasierten zellularen Datennetz.

## Patentansprüche

1. Verfahren zur Datenübertragung in einem Datennetz,
wobei ein Transport- Protokoll einer Transportschicht (10) sowie ein Signalisierungsprotokoll (20) einer Anwendungsschicht verwendet wird,
wobei Datenübertragungsvorrichtungen (16) in dem Datennetz auf Ebene der Transportschicht (10) durch ihnen zugewiesene Datennetz- Adressen (1) identifizierbar sind,
wobei in dem Datennetz eine Änderung der Datennetz- Adresse (1) mindestens einer der Datenübertragungseinrichtungen (16) möglich ist, und
wobei die Transportschicht (10) derart ausgestaltet ist, dass sie die Änderung der Datennetz- Adresse (1) bei bestehender Datenverbindung zulässt,
**dadurch gekennzeichnet,**
**dass** bei der Änderung der Datennetz- Adresse (1) auf Ebene der Transportschicht (10) diese Änderung der DatennetzAdresse (1) gegenüber dem Signalisierungsprotokoll(20) angezeigt wird, so dass das Signalisierungsprotokoll (20) bestehende Verknüpfungen mit der Datennetz- Adresse (1) aktualisieren kann.

2. Verfahren gemäß Anspruch 1,
**dadurch gekennzeichnet,**
**dass** das Anzeigen der Änderung der Datennetz- Adresse (1) durch eine Maßnahme erfolgt, welche ausgewählt ist aus einer Gruppe umfassend ein Auslösen eines Interrupts, ein Aufrufen einer Callback- Funktion und eine Übergabe einer Nachricht in Form eines Message- Objects.

3. Verfahren gemäß einem der vorhergehenden Ansprüche,
**dadurch gekennzeichnet,**
**dass** bei dem Anzeigen der Änderung der Datennetz- Adresse (1) die geänderte Datennetz- Adresse (1) an das Signalisierungsprotokoll (20) übermittelt wird.

4. Verfahren gemäß einem der vorhergehenden Ansprüche,
**dadurch gekennzeichnet,**
**dass** es sich bei der Datennetz- Adresse (1) um eine IP-Adresse entsprechend dem Internet-Protokoll handelt.

5. Verfahren gemäß Anspruch 4,
**dadurch gekennzeichnet,**
**dass** die Transportschicht (10) als Transportprotokoll ein DCCP- Transportprotokoll umfasst.

6. Verfahren gemäß einem der Ansprüche 4 oder 5, **dadurch gekennzeichnet,**
**dass** es sich bei dem Signalisierungsprotokoll (22) um das SIP-Protokoll handelt, wobei ein Teilnehmer an einer durch das SIP-Protokoll gesteuerten Datenverbindung durch einen global gültigen URI- Kennzeichner identifizierbar ist.

7. Verfahren gemäß Anspruch 6,
**dadurch gekennzeichnet,**
**dass** das SIP- Protokoll (22) als Echtzeitübertragungsprotokoll (24) ein RTP- Protokoll verwendet.

8. Verfahren gemäß einem der Ansprüche 6 oder 7,
**dadurch gekennzeichnet,**
**dass** bei einer Änderung der IP- Adresse (1) auf Ebene des SIP-Protokolls (22) eine Zuordnung des global gültigen URI-Kennzeichners zu der IP- Adresse (1) der Datenübertragungsvorrichtung (16) aktualisiert wird, wobei entsprechende Zuordnungsinformationen von URI- Kennzeichnern und IP- Adressen (1) zentral in dem Datennetz verwaltet werden.

9. Verfahren nach einem der vorhergehenden Ansprüche,
**dadurch gekennzeichnet,**
**dass** es sich bei mindestens einem Teil des Datennetzes um ein funkbasiertes zellulares Datennetz handelt

10. Verfahren gemäß einem der Ansprüche 7 bis 9,
**dadurch gekennzeichnet,**
**dass** bei der Echtzeitübertragung von Daten Sprachdaten im Rahmen einer mobilen Voice-over-IP-Anwendung übertragen werden.

11. Datenübertragungsvorrichtung (16) zur Datenübertragung in einem Datennetz,
mit zumindest einem Transport- Protokoll einer Transportschicht (10) sowie einem Signalisierungsprotokoll (20) einer Anwendungsschicht, wobei die Datenübertragungsvorrichtung (16) auf Ebene der Transportschicht (10) über eine ihr zugeordnete Datennetz- Adresse (1) identifizierbar ist und in dem Datennetz eine Änderung der Datennetz- Adresse (1) der Datenübertragungsvorrichtung (16) möglich ist, und
wobei die untere Transportschicht (10) derart ausgestaltet ist, dass sie die Änderung der Datennetz-Adresse (1) bei bestehender Datenverbindung zulässt,
**dadurch gekennzeichnet,**
**dass** die Datenübertragungsvorrichtung (16) derart ausgestaltet ist, dass die Änderung ihrer Datennetz- Adresse (1) auf Ebene der Transportschicht (10) gegenüber dem Signalisierungsprotokoll (20) angezeigt wird, so dass das Signalisierungsprotokoll (20) bestehende Verknüpfungen mit der Datennetz- Adresse (1) aktualisieren kann.

12. Datenübertragungsvorrichtung (16) gemäß Anspruch 11,
**dadurch gekennzeichnet,**
**dass** die Datenübertragungsvorrichtung (16) derart ausgestaltet ist, dass sie zur Ausführung des Verfahrens gemäß einem der Ansprüche 1-11 geeignet ist.

## Claims

1. Method for data transmission in a data network, with a transport protocol of a transport layer (10) and a signalling protocol (20) of an application layer being used,
with data transmission devices (16) in the data network being identifiable at the level of the transport layer (10) by data network addresses (1) assigned to them,
with a change of the data network address (1) of at least one of the data transmission devices (16) being possible in the data network and
with the transport layer (10) being configured in such a way that it permits the change of the data network address (1) during an existing data connection,
**characterised in that**
in the event of a change of the data network address (1) at the level of the transport layer (10) this change of the data network address (1) is indicated to the signalling protocol (20), so that the signalling protocol (20) can update existing links to the data network address (1).

2. Method according to claim 1,
**characterised in that**
the indication of the change of the data network address (1) takes place by a means that is chosen from a group including a triggering of an interrupt, a callup of a callback function and a transmission of a message in the form of a message object.

3. Method according to one of the preceding claims,
**characterised in that**
when the change of the data network address (1) is indicated, the changed data network address (1) is transmitted to the signalling protocol (20).

4. Method according to one of the preceding claims,
**characterised in that**
the data network address (1) is an IP address corresponding to the Internet protocol.

5. Method according to claim 4,
**characterised in that**
the transport layer (10) includes a DCCP transport protocol as a transport protocol.

6. Method according to one of claims 4 or 5,
**characterised in that**
the signalling protocol (22) is the SIP protocol, with a user at a data connection controlled by the SIP protocol being identifiable by a globally valid URI identifier.

7. Method according to claim 6,
**characterised in that**
the SIP protocol (22) uses an RTP protocol as a realtime transmission protocol (24).

8. Method according to one of claims 6 or 7,
**characterised in that**
in the event of a change of the IP address (1) at the level of the SIP protocol (22), an assignment of the globally valid URI identifier to the IP address (1) of the data transmission device (16) is updated, with corresponding assignment information of URI identifiers and IP addresses (1) being centrally administered in the data network.

9. Method according to one of the preceding claims,
**characterised in that**
at least one part of the data network is a radio-based cellular data network.

10. Method according to one of claims 7 to 9,
**characterised in that**
for the realtime transmission of data, voice data is transmitted as part of a mobile voice-over-IP application.

11. Data transmission device (16) for data transmission in a data network,
with at least one transport protocol of a transport layer (10) and one signalling protocol (20) of an application layer, with the data transmission device (16) being identifiable at the level of the transport layer (10) by means of a data network address (1) assigned to it, and
with a change of the data network address (1) of the data transmission device (16) being possible in the data network, and the lower transport layer (10) being configured in such a way that it permits the change of the data network address (1) during an existing data connection,
**characterised in that**
the data transmission device (16) is configured in such a way that the change of its data network address (1) at the level of the transport layer (10) is indicated to the signalling protocol (20), so that the signalling protocol (20) can update existing links to the data network address (1).

12. Data transmission device (16) according to claim 11, **characterised in that**
the data transmission device (16) is configured in such a way that it is suitable for implementing the method according to one of claims 1-11.

## Revendications

1. Procédé de transmission de données dans un réseau de données, un protocole de transport d'une couche de transport (10) et un protocole de signalisation (20) d'une couche d'application étant utilisés, des dispositifs de transmission de données (16) pouvant être identifiés dans le réseau de données au niveau de la couche de transport (10) par l'intermédiaire d'adresses de réseau de données (1) qui leur sont affectées, une modification de l'adresse de réseau de données (1) d'au moins l'un des dispositifs de transmission de données (16) étant possible dans le réseau de données et la couche de transport (10) étant réalisée de manière telle qu'elle permet la modification de l'adresse de réseau de données (1) dans le cas d'une connexion de données existante, **caractérisé en ce que**, lors de la modification de l'adresse de réseau de données (1) au niveau de la couche de transport (10), cette modification de l'adresse de réseau de données (1) est signalée au protocole de signalisation (20), de sorte que le protocole de signalisation (20) peut mettre à jour des connexions existantes avec l'adresse de réseau de données (1).

2. Procédé selon la revendication 1, **caractérisé en ce que** la signalisation de la modification de l'adresse de réseau de données (1) se fait par une mesure qui est sélectionnée dans un groupe comprenant un déclenchement d'une interruption, un appel d'une fonction de rappel et un transfert d'un message sous la forme d'un objet de message.

3. Procédé selon l'une des revendications précédentes, **caractérisé en ce que**, lors de la signalisation de la modification de l'adresse de réseau de données (1), l'adresse de réseau de données (1) modifiée est transmise au protocole de signalisation (20).

4. Procédé selon l'une des revendications précédentes, **caractérisé en ce que** l'adresse de réseau de données (1) est une adresse IP conformément au protocole Internet.

5. Procédé selon la revendication 4, **caractérisé en ce que** la couche de transport (10) comprend un protocole de transport DCCP en tant que protocole de transport.

6. Procédé selon l'une des revendications 4 ou 5, **caractérisé en ce que** le protocole de signalisation (22) est le protocole SIP, un abonné pouvant être identifié grâce à une connexion de données commandée par le protocole SIP par un identifiant URI valable globalement.

7. Procédé selon la revendication 6, **caractérisé en ce que** le protocole SIP (22) utilise un protocole RTP en tant que protocole de transmission en temps réel (24).

8. Procédé selon l'une des revendications 6 ou 7, **caractérisé en ce que**, lors d'une modification de l'adresse IP (1) au niveau du protocole SIP (22), une affectation de l'identifiant URI valable globalement à l'adresse IP (1) du dispositif de transmission de données (16) est mise à jour, des informations d'affectation correspondantes d'identifiants URI et d'adresses IP (1) étant gérées centralement dans le réseau de données.

9. Procédé selon l'une des revendications précédentes, **caractérisé en ce que** l'au moins une partie du réseau de données est un réseau radio de données cellulaire.

10. Procédé selon l'une des revendications 7 à 9, **caractérisé en ce que**, lors de la transmission de données en temps réel, des données vocales sont transmises dans le cadre d'une application mobile voix sur IP.

11. Dispositif de transmission de données (16) pour transmettre des données dans un réseau de données, avec au moins un protocole de transport d'une couche de transport (10) et un protocole de signalisation (20) d'une couche d'application, le dispositif de transmission de données (16) pouvant être identifié au niveau de la couche de transport (10) par l'intermédiaire d'une adresse de réseau de données (1) qui lui est affectée, et une modification de l'adresse de réseau de données (1) du dispositif de transmission de données (16) étant possible dans le réseau de données, et la couche de transport inférieure (10) étant réalisée de manière telle qu'elle permet la modification de l'adresse de réseau de données (1) dans le cas d'une connexion de données existante, **caractérisé en ce que** le dispositif de transmission de données (16) est réalisé de manière telle que la modification de son adresse de réseau de données (1) au niveau de la couche de transport (10) est signalée au protocole de signalisation (20), de sorte que le protocole de signalisation (20) peut mettre à jour des connexions existantes avec l'adresse de réseau de données (1).

12. Dispositif de transmission de données (16) selon la revendication 11, **caractérisé en ce que** le dispositif de transmission de données (16) est réalisé de manière telle qu'il est adapté pour exécuter le procédé selon l'une des revendications 1 à 11.
